# EUROPEAN PATENT APPLICATION

(11) **EP 4 074 993 A1**
(43) Date of publication of application: **19.10.2022**
(21) Application number: 20900596.6
(22) Date of filing: 09.04.2020
(51) Int. Cl.: F16B 39/08, F16B 39/10, F16B 39/24

(54) **ROTATION-STOPPING AND DISENGAGEMENT-STOPPING GASKET, FASTENING CONNECTION MECHANISM AND FASTENING METHOD**

(30) Priority: 13.12.2019 CN 201911286028
(71) Applicant: Yang, Dongzuo, Dongguan, Guangdong 52300 (CN)
(72) Inventor: Yang, Dongzuo, Dongguan, Guangdong 52300 (CN)
(74) Representative: Viering, Jentschura & Partner mbB Patent- und Rechtsanwälte
(86) International application number: PCT/CN2020/083941
(87) International publication number: WO 2021/114528

(57) **Abstract**

The invention discloses a fastening connection mechanism, includes a fastener assembly and an anti-rotation and anti-loosening washer, the fastener assembly includes a fastening piece and an anti-rotation sleeve sleeved on the fastening piece, a protruding body is protrudingly arranged on the outer circumference of the anti-rotation sleeve, an outer anti-rotation portion is provided on the outer circumference of the fastening piece, the anti-rotation sleeve includes a stopping hole, the inner wall of the stopping hole is provided with an inner anti-rotation body matching with the outer anti-rotation portion, the anti-rotation and anti-loosening washer includes a base body, a through hole defined on the base body, an anti-rotation portion and an anti-loosening portion; the anti-rotation portion prevents a fastener assembly from rotating relative to the anti-rotation and anti-loosening washer by blocking a protruding body extending from the fastener assembly in the circumferential direction, the anti-loosening portion is designed to be arranged on one side of the protruding body away from the base body when the anti-rotation portion blocks the protruding body, and prevents the protruding body from moving to one side away from the base body. The anti-rotation and anti-loosening washer has the functions of anti-rotation and anti-loosening and can prevent the anti-rotation sleeve from falling off. The fastening connection mechanism of the present invention is used to lock two connectors, and the connection is reliable and the anti-loosening effect is improved. In addition, the present invention also discloses related fastening methods.

## Description

### FIELD OF THE INVENTION

The invention disclosure relates to the field of fastening, and more particularly to an anti-rotation and anti-loosening washer, a fastening connection mechanism and a fastening method thereof.

### BACKGROUND OF THE INVENTION

The Chinese patent application CN201610777306.7 discloses a fastening connecting assembly, a fastening connecting structure, and a track structure. An anti-rotation sleeve is defined in the invention, the anti-rotation sleeve is provided with an anti-rotation protrusion, and an appendage anti-rotation protrusion is provided on the appendage. The anti-rotation protrusion of the anti-rotation sleeve and the appendage anti-rotation protrusion resist each other, thereby realizing the anti-rotation of the anti-rotation sleeve relative to the appendage. Because the anti-rotation sleeve stops rotating relative to the bolt or the nut, then the anti-rotation of the bolt or the nut relative to the appendage is realized. Finally, the anti-rotation sleeve is resisted by the nut to prevent it from falling off along the axial direction of the bolt or the nut.

However, the above solution has the following problems:
(1) The appendage anti-rotation protrusion needs to be manufactured on the appendage, which is more troublesome, and it is not suitable to manufacture the appendage anti-rotation protrusion on certain appendages;
(2) In order to prevent the anti-rotation sleeve from falling off, additional retaining nuts or other retaining parts need to be added.

Therefore, there is a need for improvement.

### SUMMARY OF THE INVENTION

The purpose of the invention is to provide anti-rotation and anti-loosening washer, fastening connection mechanism and fastening method thereof that can effectively solve the above-mentioned problems. The invention has the features of anti-rotation and anti-loosening, convenient operation, and simple structure. In order to achieve the purpose, the invention utilizes the following technical solution:
an anti-rotation and anti-loosening washer, comprising: a base body; a through hole defined on the base body; wherein further includes an anti-rotation portion and an anti-loosening portion; the anti-rotation portion prevents a fastener assembly from rotating relative to the anti-rotation and anti-loosening washer by blocking a protruding body extending from the fastener assembly in the circumferential direction, the anti-loosening portion is designed to be arranged on one side of the protruding body away from the base body when the anti-rotation portion blocks the protruding body, and prevents the protruding body from moving to one side away from the base body.

Further, the anti-rotation portion is a first anti-rotation block protrudingly defined on one side of the base body, the anti-loosening portion is an anti-loosening block defined on the side of the first anti-rotation block away from the base body.

Further, the anti-rotation portion is an arc-shaped anti-rotation groove opened on the base body, an anti-rotation wall is formed on the sidewall at one end of the arc-shaped anti-rotation groove, the arc center of the anti-rotation groove is concentric with the center of the through hole.

Further, the anti-loosening portion is an anti-loosening block defined on one side of the anti-rotation wall away from the base body, an insertion end is formed at one end of the anti-rotation groove away from the anti-rotation wall, and the insertion end is used for insertion of the protruding body of the fastener assembly.

Further, the anti-rotation and anti-loosening washer further includes a second anti-rotation block, the second anti-rotation block is protrudingly provided on the base body close to lateral side of a connector, the second anti-rotation block is inserted into a concave hole defined on the surface of the connector so as to stop rotating with the connector.

Further, the base body, the anti-rotation portion and the anti-loosening portion are integrally formed.

A fastening connection mechanism comprises: a fastener assembly and an anti-rotation and anti-loosening washer, the fastener assembly includes a fastening piece and an anti-rotation sleeve sleeved on the fastening piece, a protruding body is protrudingly arranged on the outer circumference of the anti-rotation sleeve, an outer anti-rotation portion is provided on the outer circumference of the fastening piece, the anti-rotation sleeve includes a stopping hole, the inner wall of the stopping hole is provided with an inner anti-rotation body matching with the outer anti-rotation portion, wherein, the anti-rotation and anti-loosening washer includes a base body, a through hole defined on the base body, an anti-rotation portion and an anti-loosening portion; the anti-rotation portion prevents a fastener assembly from rotating relative to the anti-rotation and anti-loosening washer by blocking a protruding body extending from the fastener assembly in the circumferential direction, the anti-loosening portion is designed to be arranged on one side of the protruding body away from the base body when the anti-rotation portion blocks the protruding body, and prevents the protruding body from moving to one side away from the base body.

Further, the fastening piece is an outer hexagonal bolt, the outer hexagonal bolt includes a head portion and a shank portion, the outer peripheral wall of the head portion of the outer hexagonal bolt forms the outer anti-rotation portion.

Further, the fastening piece is an inner hexagonal bolt, the inner hexagonal bolt includes a head portion and a shank portion, the outer anti-rotation part is an outer anti-rotation groove provided on the outer periphery of the head portion of the inner hexagonal bolt, the outer anti-rotation groove is a plurality of trapezoidal grooves arranged in an array along the outer circumference of the head portion of the inner hexagonal bolt; further includes a wrench, the wrench includes a handle and a locking sleeve arranged on one end of the handle, the inner wall of the locking sleeve is provided with a plurality of trapezoidal protrusions matched with the trapezoidal grooves.

Further, the fastening piece is a hexagonal nut, the outer anti-rotation portion is formed on the outer peripheral wall of the hexagonal nut.

Further, the anti-rotation portion is a first anti-rotation block protrudingly defined on the side of the base body away from a connector, the anti-loosening portion is an anti-loosening block defined on the side of the first anti-rotation block away from the base body, a protrusion accommodating area is formed between the first anti-rotation block, the anti-loosening block and the base body, the base body, the anti-rotation portion and the anti-loosening portion are integrally formed.

Further, the anti-rotation and anti-loosening washer further includes a second anti-rotation block, the second anti-rotation block is protrudingly defined on the base body close to lateral side of a connector, the second anti-rotation block is inserted into a concave hole defined on the surface of the connector so as to stop rotating with the connector.

A fastening method, characterized in that it comprises the following steps:
(1) providing a bolt, an anti-rotation and anti-loosening washer, two connectors and a nut, the two connectors are respectively provided with a through hole, passing the bolt through the anti-rotation and anti-loosening washer and the through holes of the connectors in sequence, and lock them with the nut; the two connector includes a first connector and a second connector, or passing the bolt through the anti-rotation and anti-loosening washer and the through hole of the first connector in sequence, then threadedly connects with a threaded hole of the second connector;
(2) sleeving an anti-rotation sleeve on a head portion of the bolt, the anti-rotation sleeve stops rotating relative to the head of the bolt, then rotating the bolt in the loosening direction until a protruding body of the anti-rotation sleeve is blocked by an anti-rotation portion defined on the anti-rotation and anti-loosening washer, the anti-rotation and anti-loosening washer is located on one side of the protruding body in the loosening direction, thus, the side of the protruding body away from the connectors is restricted by the anti-rotation portion of the anti-rotation and anti-loosening washer to prevent the anti-rotation sleeve from falling off the head portion of the bolt.

Another fastening method, characterized in that it comprises the following steps:
(1) providing a bolt, two connectors, an anti-rotation and anti-loosening washer and a nut, passing the bolt through the two connectors and the anti-rotation anti-loosening washer in sequence, and lock the two connectors by the nut; the two connector includes a first connector and a second connector, or providing an expansion screw provided with an expansion end and a threaded end, putting the expansion end of the expansion screw in a blind hole of the first connector, passing the threaded end of the expansion screw through the second connector and the anti-rotation and anti-loosening washer in sequence, and lock the two connectors by the nut;
(2) sleeving an anti-rotation sleeve on the outer circumference of the nut, the anti-rotation sleeve stops rotating relative to the nut, then rotating the nut in the loosening direction until a protruding body of the anti-rotation sleeve is resisted by an anti-rotation portion defined on the anti-rotation and anti-loosening washer, the anti-rotation and anti-loosening washer is located on one side of the protruding body in the loosening direction, thus, the side of the protruding body away from the connectors is restricted by the anti-rotation portion of the anti-rotation and anti-loosening washer to prevent the anti-rotation sleeve from falling off the nut.

The anti-rotation and anti-loosening washer in the present invention has the functions of anti-rotation and anti-loosening and can prevent the anti-rotation sleeve from falling off. The fastening connection mechanism of the present invention is used to lock two connectors, and the connection is reliable and the anti-loosening effect is improved.

In the conventional fastening method, after the bolt is tightened, loosening a certain angle in the loosening direction prevents the stress of the head portion of the bolt from being excessive. This method is widely used in the fastening of the hubs. After tightening the bolts and then loosening a certain angle, the pre-tightening force will be reduced. The bolts are in the elastic deformation limit after tightening, especially in the case of high temperature and full load of vibration, the bolt under such continuous pressure for a long time will produce ultimate creep. The ultimate creep of the bolt will lead to plastic deformation. After the fixed state is formed, the tightening strength will decrease significantly or even fail. Retracting half a circle is to reduce the limit elastic deformation, so that the bolt is in the normal elastic deformation range, and the pre-tightening stress is reduced. Since then, in the continuous pressure tightening state, the probability of extreme plastic deformation and failure of the bolt is greatly reduced, so that the bolt can maintain a continuous incentive tightening pressure.

The fastening method in the present invention skillfully combines the above-mentioned conventional fastening method here. After the bolt or the nut is tightened and then reversely loosened, the protruding body of the anti-rotation sleeve is restricted by the first anti-rotation block and the anti-loosening block defined on the anti-rotation anti-loosening washer. Therefore, it can realize the anti-rotation of the bolt or the nut relative to the anti-rotation anti-loosening washer, prevent the anti-rotation sleeve from falling off the bolt or the nut, and achieve the functions of anti-rotation and anti-loosening at the same time.

### BRIEF DESCRIPTION OF THE DRAWINGS

Many aspects of the embodiments can be better understood with reference to the following drawings. The components in the drawings are not necessarily drawn to scale, the emphasis instead being placed upon clearly illustrating the principles of the embodiments. Moreover, in the drawings, like reference numerals designate corresponding parts throughout the several views.
FIG. 1 illustrates a schematic view of the first embodiment according to the invention;
FIG. 2 illustrates an exploded view of the first embodiment according to the invention;
FIG. 3 illustrates an exploded view of the second embodiment according to the invention;
FIG. 4 illustrates a schematic view of the third embodiment according to the invention;
FIG. 5 illustrates an exploded view of the third embodiment according to the invention;
FIG. 6 illustrates a schematic view of the fourth embodiment according to the invention;
FIG. 7 illustrates an exploded view of the fourth embodiment according to the invention;
FIG. 8 illustrates an exploded view of the fifth embodiment according to the invention;
FIG. 9 illustrates a schematic view of the second anti-rotation block;
FIG. 10 illustrates a cross-sectional view of the sixth embodiment according to the invention.

### DETAILED DESCRIPTION OF THE INVENTION

The disclosure is illustrated by way of example and not by way of limitation in the figures of the accompanying drawings in which like references indicate similar elements. It should be noted that references to "an" or "one" embodiment in this disclosure are not necessarily to the same embodiment, and such references mean "at least one."

### [Embodiment 1]

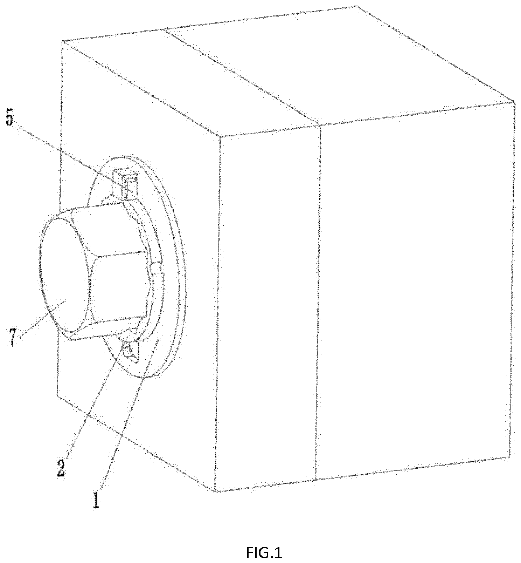

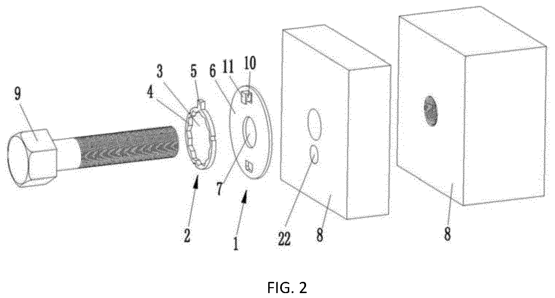

As shown in FIG. 1 and FIG. 2, a fastening connection mechanism is disclosed. The fastening connection mechanism includes a fastening assembly and an anti-rotation and anti-loosening washer 1, the fastener assembly includes a fastening piece and an anti-rotation sleeve 2 sleeved on the fastening piece, an outer anti-rotation portion 9 is provided on the outer circumference of the fastening piece, the anti-rotation sleeve 2 includes a stopping hole 3, the inner wall of the stopping hole 3 is provided with an inner anti-rotation body 4 matching with the outer anti-rotation portion 9, a protruding body 5 is protrudingly arranged on the outer circumference of the anti-rotation sleeve 2, the anti-rotation and anti-loosening washer 1 includes a base body 6, a through hole defined on the base body 6, an anti-rotation portion and an anti-loosening portion; the anti-rotation portion prevents a fastener assembly from rotating relative to the anti-rotation and anti-loosening washer 1 by blocking a protruding body 5 extending from the fastener assembly in the circumferential direction, the anti-loosening portion is designed to be arranged on one side of the protruding body 5 away from the base body 6 when the anti-rotation portion blocks the protruding body 5, and prevents the protruding body 5 from moving to one side away from the base body 6.

In the first embodiment, the fastening piece is an outer hexagonal bolt 7, the outer hexagonal bolt 7 passes through the anti-rotation and anti-loosening washer 1 and a through hole of a first connector 8 in sequence, then threadedly connects with a threaded hole of a second connector 8; the tightening direction is the clockwise direction of the outer hexagonal bolt 7, and the outer anti-rotation portion 9 refers to the hexagonal outer wall of a head portion of the bolt.

The specific structure of the anti-rotation anti-loosening washer 1 is as follows, the anti-rotation portion is a first anti-rotation block 10 protrudingly defined on the side of the base body 6 away from the connector 8, the anti-loosening portion is an anti-loosening block 11 defined on the side of a first anti-rotation block 10 away from the base body 6, the anti-loosening block 11 is defined on the clockwise side of the first anti-rotation block 10. Moreover, the base body 6, the first anti-rotation block 10 and the anti-loosening block 11 are integrally formed by stamping.

The fastening method according to the first embodiment includes the following steps:
(1) passing the outer hexagonal bolt 7 through the anti-rotation and anti-loosening washer 1 and the through hole of the first connector 8 in sequence, then threadedly connects with a threaded hole of the second connector 8;
(2) sleeving an anti-rotation sleeve 2 on a head portion of the outer hexagonal bolt 7, the anti-rotation sleeve 2 stops rotating relative to the head portion of the outer hexagonal bolt 7, rotating the outer hexagonal bolt 7 counterclockwise until a protruding body 5 of the anti-rotation sleeve 2 is blocked by the first anti-rotation block 10 defined on the anti-rotation and anti-loosening washer 1, the anti-rotation and anti-loosening washer 1 is located on one side of the protruding body 5 in the loosening direction, thus, the side of the protruding body 5 away from the connectors 8 is restricted by the anti-loosening block 11 of the anti-rotation and anti-loosening washer 1 to prevent the anti-rotation sleeve 2 from falling off the head portion of the outer hexagonal bolt 7.

In the fastening connection mechanism and the fastening method according to the above embodiment, the contact area between the anti-rotation and anti-loosening washer 1 and the surface of the connector 8 is larger than the contact area between the head of the outer hexagonal bolt 7 and the anti-rotation and anti-loosening washer 1, so the connection between the outer hexagonal bolt 7 and the anti-rotation anti-loosening washer 1 is easier to loosen compared with the connection between the anti-rotation anti-loosening washer 1 and the connector 8. The first anti-rotation block 10 defined on the anti-rotation and anti-loosening washer 1 realizes the relative anti-rotation of the outer hexagonal bolt and the anti-rotation anti-loosening washer 1 and increases the anti-rotation effect of the fastening connection mechanism.

In the conventional fastening method, after the outer hexagonal bolt 7 is tightened, loosening a certain angle in the loosening direction prevents the stress of the head portion of the outer hexagonal bolt 7 from being excessive. This method is widely used in the fastening of the hubs. The fastening method in the present invention skillfully combines the above-mentioned conventional fastening method here. After the bolt is tightened and then reversely loosened, the protruding body 5 of the anti-rotation sleeve 2 is restricted by the first anti-rotation block 10 and the anti-loosening block 11 defined on the anti-rotation anti-loosening washer 1. Therefore, it can realize the anti-rotation of the bolt relative to the anti-rotation anti-loosening washer 1, prevent the anti-rotation sleeve 2 from falling off the bolt, and achieve the functions of anti-rotation and anti-loosening at the same time.

### [Embodiment 2]

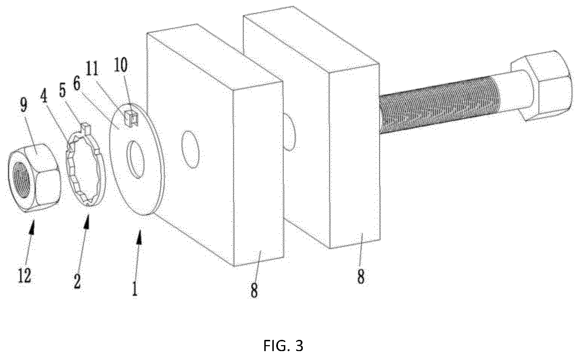

FIG. 3 shows the fastening connection mechanism of the second embodiment. The fastening connection mechanism includes a fastening assembly and an anti-rotation and anti-loosening washer 1, the fastener assembly includes a fastening piece and an anti-rotation sleeve 2 sleeved on the fastening piece, an outer anti-rotation portion 9 is provided on the outer circumference of the fastening piece, the anti-rotation sleeve 2 includes a stopping hole 3, the inner wall of the stopping hole 3 is provided with an inner anti-rotation body 4 matching with the outer anti-rotation portion 9, a protruding body 5 is protrudingly arranged on the outer circumference of the anti-rotation sleeve 2, the anti-rotation and anti-loosening washer 1 includes a base body 6, a through hole defined on the base body 6, an anti-rotation portion and an anti-loosening portion; the anti-rotation portion prevents a fastener assembly from rotating relative to the anti-rotation and anti-loosening washer 1 by blocking a protruding body 5 extending from the fastener assembly in the circumferential direction, the anti-loosening portion is designed to be arranged on one side of the protruding body 5 away from the base body 6 when the anti-rotation portion blocks the protruding body 5, and prevents the protruding body 5 from moving to one side away from the base body 6.

In the second embodiment, the fastening piece is a hexagonal nut 12, the bolt passes through the two connectors 8 and the anti-rotation and anti-loosening washer 1 in sequence, and then the two connectors 8 are tightened via the hexagonal nut 12, the tightening direction is the clockwise direction of the hexagonal nut 12, the outer anti-rotation portion 9 refers to the hexagonal outer wall of the hexagonal nut 12.

The specific structure of the anti-rotation anti-loosening washer 1 is as follows, the anti-rotation portion is a first anti-rotation block 10 protrudingly defined on the side of the base body 6 away from the connector 8, the anti-loosening portion is an anti-loosening block 11 defined on the side of a first anti-rotation block 10 away from the base body 6, the anti-loosening block 11 is defined on the clockwise side of the first anti-rotation block 10. Moreover, the base body 6, the first anti-rotation block 10 and the anti-loosening block 11 are integrally formed by stamping.

The fastening method according to the second embodiment includes the following steps:
(1) passing the bolt through the two connectors 8 and the anti-rotation and anti-loosening washer in sequence, and then tightening the two connectors 8 via the hexagonal nut 12;
(2) sleeving an anti-rotation sleeve 2 on the outer circumference of the hexagon nut 12, the anti-rotation sleeve 2 stops rotating relative to the hexagonal nut 12, rotating the hexagonal nut 12 in the loosening direction until a protruding body 5 of the anti-rotation sleeve 2 is blocked by the first anti-rotation block 10 defined on the anti-rotation and anti-loosening washer 1, the anti-rotation and anti-loosening washer 1 is located on one side of the protruding body 5 in the loosening direction, thus, the side of the protruding body away from the connectors 8 is restricted by the anti-loosening block 11 of the anti-rotation and anti-loosening washer 1 to prevent the anti-rotation sleeve 2 from falling off from the hexagonal nut 12.

In the fastening connection mechanism and the fastening method according to the above embodiment, the contact area between the anti-rotation and anti-loosening washer 1 and the surface of the connector 8 is larger than the contact area between the hexagonal nut 12 and the anti-rotation and anti-loosening washer 1, so the connection between the hexagonal nut 12 and the anti-rotation anti-loosening washer 1 is easier to loosen compared with the connection between the anti-rotation anti-loosening washer 1 and the connector 8. The first anti-rotation block 10 defined on the anti-rotation and anti-loosening washer 1 realizes the relative anti-rotation of the hexagonal nut 12 and the anti-rotation anti-loosening washer 1 and increases the anti-rotation effect of the fastening connection mechanism.

In the conventional fastening method, after the nut is tightened, loosening a certain angle in the loosening direction prevents the shank portion of the bolt from being broken due to the excessive interaction force between the hexagonal nut 12 and the shank portion of the bolt. The fastening method in the present invention skillfully combines the above-mentioned conventional fastening method here. After the nut is tightened and then reversely loosened, the protruding body 5 of the anti-rotation sleeve 2 is restricted by the first anti-rotation block 10 and the anti-loosening block 11 defined on the anti-rotation anti-loosening washer 1. Therefore, it can realize the anti-rotation of the hexagonal nut 12 relative to the anti-rotation anti-loosening washer 1, prevent the anti-rotation sleeve 2 from falling off the nut, and achieve the functions of anti-rotation and anti-loosening at the same time.

### [Embodiment 3]

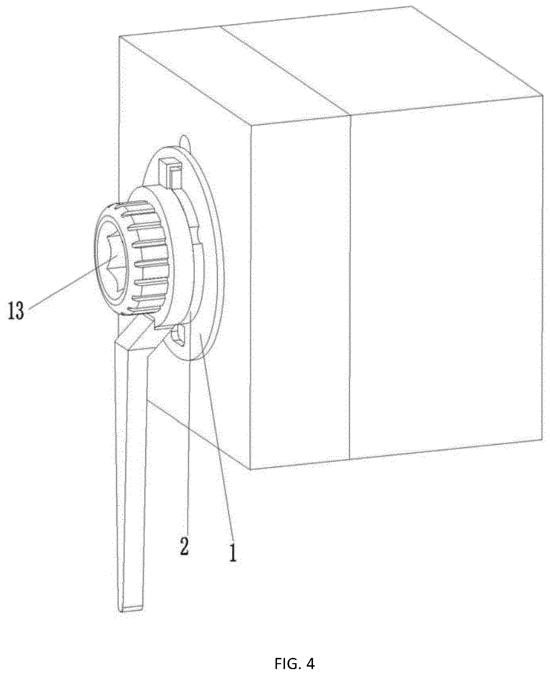

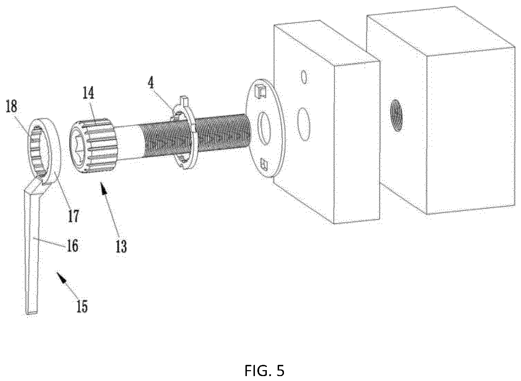

As shown in FIG. 4 and FIG. 5, the difference between the third embodiment and the first embodiment is that the fastening piece in the third embodiment is an inner hexagonal bolt 13. The outer anti-rotation portion 9 is a plurality of trapezoidal grooves 14 arranged in an array along the outer circumference of the head portion of the inner hexagonal bolt 13. Correspondingly, the inner wall of the stopping hole 3 of the anti-rotation sleeve 2 is provided with a trapezoidal inner anti-rotation body 4. The inner anti-rotation body 4 is inserted into the trapezoidal groove 14, and the anti-rotation sleeve 2 stops rotating relative to the inner hexagonal bolt 13.

In the third preferred embodiment, a special wrench 15 is matched with the head of the inner hexagonal bolt 13 to rotate the inner hexagonal bolt 13. A regular hexagonal wrench 15 is alternatively adopted to rotate the inner hexagonal bolt 13. The special wrench 15 includes a handle 16 and a locking sleeve 17 arranged at one end of the handle 16. The inner wall of the locking sleeve 17 is provided with a plurality of trapezoidal protrusions 18 that cooperate with the trapezoidal groove 14.

### [Embodiment 4]

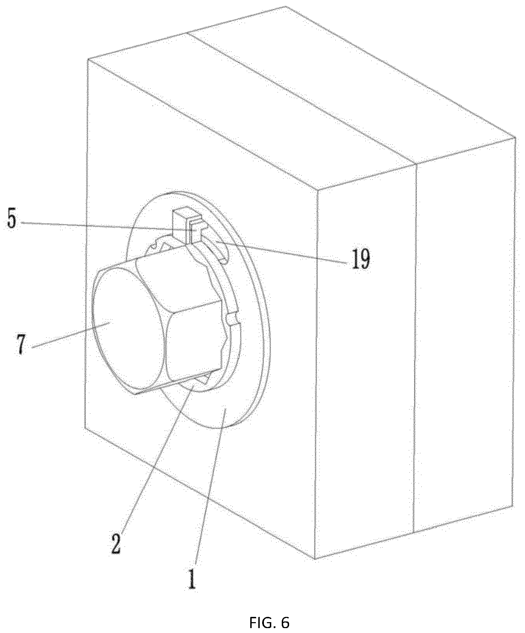

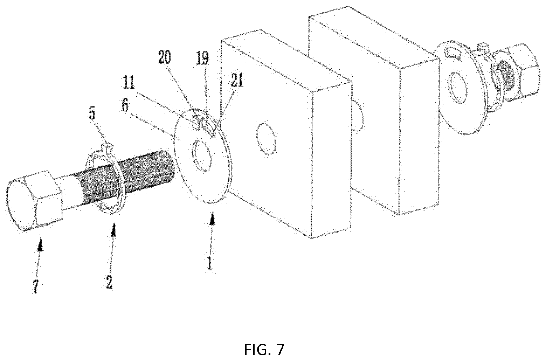

As shown in FIG.6 and FIG. 7, a fastening connection mechanism is disclosed. The fastening connection mechanism includes a fastening assembly and an anti-rotation and anti-loosening washer 1, the fastener assembly includes a fastening piece and an anti-rotation sleeve 2 sleeved on the fastening piece, an outer anti-rotation portion 9 is provided on the outer circumference of the fastening piece, the anti-rotation sleeve 2 includes a stopping hole 3, the inner wall of the stopping hole 3 is provided with an inner anti-rotation body 4 matching with the outer anti-rotation portion 9, a protruding body 5 is protrudingly arranged on the outer circumference of the anti-rotation sleeve 2, the anti-rotation and anti-loosening washer 1 includes a base body 6, a through hole defined on the base body 6, an anti-rotation portion and an anti-loosening portion; the anti-rotation portion prevents a fastener assembly from rotating relative to the anti-rotation and anti-loosening washer 1 by blocking a protruding body 5 extending from the fastener assembly in the circumferential direction, the anti-loosening portion is designed to be arranged on one side of the protruding body 5 away from the base body 6 when the anti-rotation portion blocks the protruding body 5, and prevents the protruding body 5 from moving to one side away from the base body 6.

In the fourth embodiment, the fastening piece is an outer hexagonal bolt 7, the outer hexagonal bolt 7 passes through the anti-rotation and anti-loosening washer 1 and a through hole of a first connector 8 in sequence, then threadedly connects with a threaded hole of a second connector 8; the tightening direction is the clockwise direction of the outer hexagonal bolt 7, and the outer anti-rotation portion 9 refers to the hexagonal outer wall of a head portion of the bolt.

The specific structure of the anti-rotation anti-loosening washer 1 is as follows, the anti-rotation portion is an arc-shaped anti-rotation groove 19 opened on the base body 6, an anti-rotation wall 20 is formed on the sidewall at one end of the arc-shaped anti-rotation groove 19, the arc center of the anti-rotation groove 19 is concentric with the center of the through hole 7. The anti-loosening portion is an anti-loosening block 11 defined on the side of the anti-rotation wall 20 away from the base body 6, one end of the anti-rotation groove 19 away from the anti-rotation wall 20 forms an insertion end 21 for inserting the protruding body 5 of the fastener assembly, the anti-loosening block 11 and the base body 6 are integrally formed by stamping.

The fastening method according to the fourth embodiment includes the following steps:
(1) passing the outer hexagonal bolt 7 through the anti-rotation and anti-loosening washer 1 and the through hole of the first connector 8 in sequence, then threadedly connects with a threaded hole of the second connector 8;
(2) sleeving an anti-rotation sleeve 2 on a head portion of the outer hexagonal bolt 7, the anti-rotation sleeve 2 stops rotating relative to the head portion of the outer hexagonal bolt 7. At this time, the protruding body 5 of the anti-rotation sleeve 2 extends into the anti-rotation groove 19 of the anti-rotation and anti-loosening washer 1. Then rotating the outer hexagonal bolt 7 counterclockwise until a protruding body 5 of the anti-rotation sleeve 2 is blocked by the anti-rotation wall 20, the anti-rotation wall 20 is located on one side of the protruding body 5 in the loosening direction, thus, the side of the protruding body 5 away from the connectors 8 is restricted by the anti-loosening block 11 of the anti-rotation and anti-loosening washer 1 to prevent the anti-rotation sleeve 2 from falling off the head portion of the outer hexagonal bolt 7.

### [Embodiment 5]

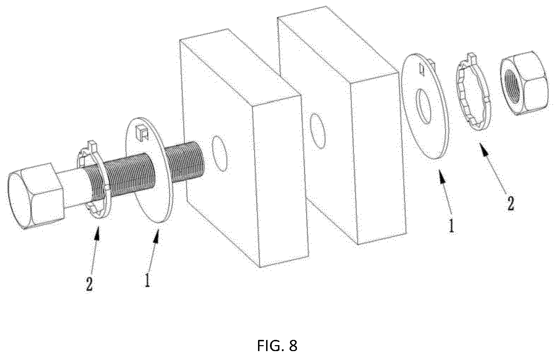

As shown in FIG. 8, the fifth embodiment is actually a combination of the first embodiment and the second embodiment. That is, the fastening combination of the outer hexagonal bolt 7 and the hexagonal nut 12 is both adopted, and the anti-rotation and anti-loosening washer 1 and the anti-rotation sleeve 2 are provided at both ends to achieve the effect of anti-rotation and anti-loosening.

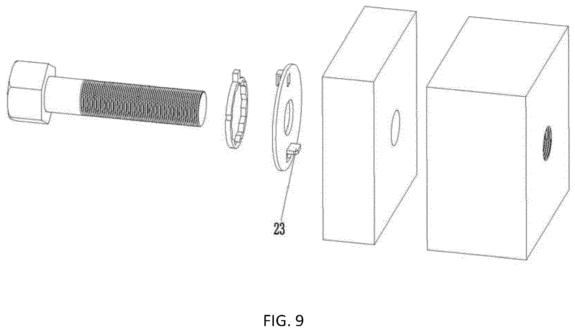

FIG. 2 and FIG 9. show an improvement on the basis of any one of the above-mentioned Embodiment 1 to Embodiment 5. The anti-rotation and anti-loosening washer 1 further includes a second anti-rotation block 23 protrudingly provided on the base body 6 close to lateral side of a connector 8, the second anti-rotation block 23 is inserted into a concave hole 22 defined on the surface of the connector so as to stop rotating with the connector 8. In this preferred embodiment, the anti-rotation and anti-loosening washer 1 is prevented from rotating relative to the connected 8 via the second anti-rotation block 23, which further increases the anti-rotation and anti-loosening effect.

### [Embodiment 6]

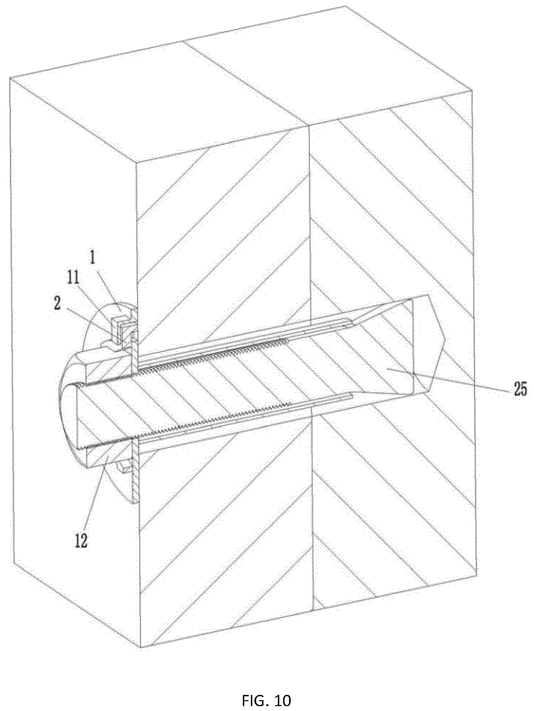

FIG. 10 shows the sixth embodiment, the difference between the sixth embodiment and the second embodiment is that the fastening piece is an expansion screw 25.

The fastening method according to the sixth embodiment includes the following steps:
(1) putting an expansion end of the expansion screw 25 in a blind hole of the first connector, passing the threaded end of the expansion screw 25 through the second connector and the anti-rotation and anti-loosening washer 1 in sequence, and lock the two connectors by the hexagonal nut 12;
(2) sleeving an anti-rotation sleeve 2 on the outer circumference of the hexagon nut 12, the anti-rotation sleeve 2 stops rotating relative to the hexagonal nut 12, rotating the hexagonal nut 12 in the loosening direction until the protruding body 5 of the anti-rotation sleeve 2 is blocked by the first anti-rotation block 10 defined on the anti-rotation and anti-loosening washer 1, the anti-rotation and anti-loosening washer 1 is located on one side of the protruding body 5 in the loosening direction, thus, the side of the protruding body away from the connectors 8 is restricted by the anti-loosening block 11 of the anti-rotation and anti-loosening washer 1 to prevent the anti-rotation sleeve 2 from falling off from the hexagonal nut 12.

It is to be understood, however, that even though numerous characteristics and advantages have been set forth in the foregoing description of embodiments, together with details of the structures and functions of the embodiments, the disclosure is illustrative only and changes may be made in detail, especially in matters of shape, size, and arrangement of parts within the principles of the disclosure to the full extent indicated by the broad general meaning of the terms in which the appended claims are expressed.

## Claims

1. An anti-rotation and anti-loosening washer, comprising:
a base body;
a through hole defined on the base body; wherein further includes
an anti-rotation portion and an anti-loosening portion;
the anti-rotation portion prevents a fastener assembly from rotating relative to the anti-rotation and anti-loosening washer by blocking a protruding body extending from the fastener assembly in the circumferential direction, the anti-loosening portion is designed to be arranged on one side of the protruding body away from the base body when the anti-rotation portion blocks the protruding body, and prevents the protruding body from moving to one side away from the base body.

2. The anti-rotation and anti-loosening washer as defined in claim 1, wherein the anti-rotation portion is a first anti-rotation block protrudingly defined on one side of the base body, the anti-loosening portion is an anti-loosening block defined on the side of the first anti-rotation block away from the base body.

3. The anti-rotation and anti-loosening washer as defined in claim 1, wherein the anti-rotation portion is an arc-shaped anti-rotation groove opened on the base body, an anti-rotation wall is formed on the sidewall at one end of the arc-shaped anti-rotation groove, the arc center of the anti-rotation groove is concentric with the center of the through hole.

4. The anti-rotation and anti-loosening washer as defined in claim 3, wherein the anti-loosening portion is an anti-loosening block defined on one side of the anti-rotation wall away from the base body, an insertion end is formed at one end of the anti-rotation groove away from the anti-rotation wall, and the insertion end is used for insertion of the protruding body of the fastener assembly.

5. The anti-rotation and anti-loosening washer as defined in claim 1, wherein the anti-rotation and anti-loosening washer further includes a second anti-rotation block, the second anti-rotation block is protrudingly provided on the base body close to lateral side of a connector, the second anti-rotation block is inserted into a concave hole defined on the surface of the connector so as to stop rotating with the connector.

6. The anti-rotation and anti-loosening washer as defined in any one of claim 1 to claim 5, wherein the base body, the anti-rotation portion and the anti-loosening portion are integrally formed.

7. A fastening connection mechanism, comprising:
a fastener assembly and
an anti-rotation and anti-loosening washer,
the fastener assembly includes a fastening piece and an anti-rotation sleeve sleeved on the fastening piece, a protruding body is protrudingly arranged on the outer circumference of the anti-rotation sleeve, an outer anti-rotation portion is provided on the outer circumference of the fastening piece, the anti-rotation sleeve includes a stopping hole, the inner wall of the stopping hole is provided with an inner anti-rotation body matching with the outer anti-rotation portion, wherein,
the anti-rotation and anti-loosening washer includes a base body, a through hole defined on the base body, an anti-rotation portion and an anti-loosening portion; the anti-rotation portion prevents a fastener assembly from rotating relative to the anti-rotation and anti-loosening washer by blocking a protruding body extending from the fastener assembly in the circumferential direction, the anti-loosening portion is designed to be arranged on one side of the protruding body away from the base body when the anti-rotation portion blocks the protruding body, and prevents the protruding body from moving to one side away from the base body.

8. The fastening connection mechanism as defined in claim 7, wherein the fastening piece is an outer hexagonal bolt, the outer hexagonal bolt includes a head portion and a shank portion, the outer peripheral wall of the head portion of the outer hexagonal bolt forms the outer anti-rotation portion.

9. The fastening connection mechanism as defined in claim 7, wherein the fastening piece is an inner hexagonal bolt, the inner hexagonal bolt includes a head portion and a shank portion, the outer anti-rotation part is an outer anti-rotation groove provided on the outer periphery of the head portion of the inner hexagonal bolt, the outer anti-rotation groove is a plurality of trapezoidal grooves arranged in an array along the outer circumference of the head portion of the inner hexagonal bolt; further includes a wrench, the wrench includes a handle and a locking sleeve arranged on one end of the handle, the inner wall of the locking sleeve is provided with a plurality of trapezoidal protrusions matched with the trapezoidal grooves.

10. The fastening connection mechanism as defined in claim 7, wherein the fastening piece is a hexagonal nut, the outer anti-rotation portion is formed on the outer peripheral wall of the hexagonal nut.

11. The fastening connection mechanism as defined in claim 7, wherein the anti-rotation portion is a first anti-rotation block protrudingly defined on the side of the base body away from a connector, the anti-loosening portion is an anti-loosening block defined on the side of the first anti-rotation block away from the base body, a protrusion accommodating area is formed between the first anti-rotation block, the anti-loosening block and the base body, the base body, the anti-rotation portion and the anti-loosening portion are integrally formed.

12. The fastening connection mechanism as defined in any one of claim 7 to claim 11, wherein the anti-rotation and anti-loosening washer further includes a second anti-rotation block, the second anti-rotation block is protrudingly defined on the base body close to lateral side of a connector, the second anti-rotation block is inserted into a concave hole defined on the surface of the connector so as to stop rotating with the connector.

13. A fastening method, **characterized in that** it comprises the following steps:
(1) providing a bolt, an anti-rotation and anti-loosening washer, two connectors and a nut, the two connectors are respectively provided with a through hole, passing the bolt through the anti-rotation and anti-loosening washer and the through holes of the connectors in sequence, and lock them with the nut; the two connector includes a first connector and a second connector, or passing the bolt through the anti-rotation and anti-loosening washer and the through hole of the first connector in sequence, then threadedly connects with a threaded hole of the second connector;
(2) sleeving an anti-rotation sleeve on a head portion of the bolt, the anti-rotation sleeve stops rotating relative to the head of the bolt, then rotating the bolt in the loosening direction until a protruding body of the anti-rotation sleeve is blocked by an anti-rotation portion defined on the anti-rotation and anti-loosening washer, the anti-rotation and anti-loosening washer is located on one side of the protruding body in the loosening direction, thus, the side of the protruding body away from the connectors is restricted by the anti-rotation portion of the anti-rotation and anti-loosening washer to prevent the anti-rotation sleeve from falling off the head portion of the bolt.

14. A fastening method, **characterized in that** it comprises the following steps:
(1) providing a bolt, two connectors, an anti-rotation and anti-loosening washer and a nut, passing the bolt through the two connectors and the anti-rotation anti-loosening washer in sequence, and lock the two connectors by the nut; the two connector includes a first connector and a second connector, or providing an expansion screw provided with an expansion end and a threaded end, putting the expansion end of the expansion screw in a blind hole of the first connector, passing the threaded end of the expansion screw through the second connector and the anti-rotation and anti-loosening washer in sequence, and lock the two connectors by the nut;
(2) sleeving an anti-rotation sleeve on the outer circumference of the nut, the anti-rotation sleeve stops rotating relative to the nut, then rotating the nut in the loosening direction until a protruding body of the anti-rotation sleeve is resisted by an anti-rotation portion defined on the anti-rotation and anti-loosening washer, the anti-rotation and anti-loosening washer is located on one side of the protruding body in the loosening direction, thus, the side of the protruding body away from the connectors is restricted by the anti-rotation portion of the anti-rotation and anti-loosening washer to prevent the anti-rotation sleeve from falling off the nut.
